# EUROPEAN PATENT APPLICATION

(11) **EP 1 574 247 A1**
(43) Date of publication of application: **14.09.2005**
(21) Application number: 05251368.6
(22) Date of filing: 08.03.2005
(51) Int. Cl.: B01D 53/04

(54) **Hydrocarbon separation method**

(30) Priority: 09.03.2004 US 551583 P; 02.03.2005 US 70466
(71) Applicant: THE BOC GROUP, INC., New Jersey 07974-2082 (US)
(72) Inventor: Jovanovic, Stevan, North Plainfiled NJ 07060 (US); Limbach, Kirk Walton, Dresher, PA 19025 (US); Jain, Ravi, Bridgewater, NJ 08807 (US); Fitch, Frank Roger, Bedminster, NJ 07921 (US); Park, Seungdoo, North Brunswick, NJ 08902 (US); Bulow, Martin, Basking Ridge, NJ 07920-3043 (US)
(74) Representative: Wickham, Michael

(57) **Abstract**

A method of separating hydrocarbons (such as short chain paraffins and olefins) from non-hydrocarbon gases using short-cycle time concentration swing adsorption processes. The hydrocarbons are adsorbed from the gaseous stream on water-stable highly siliceous nanoporous materials, e.g., such as of aluminum-deficient faujasite-type zeolites, then desorbed from the adsorbent in the presence of steam. Optionally, the steam is desorbed from the adsorbent through the use of air or inert gas or a recycle of the non-adsorbed gas.

## Description

### BACKGROUND OF THE INVENTION

The present invention relates to a method for separating hydrocarbons from non-hydrocarbon gases such as nitrogen, carbon monoxide and carbon dioxide. The hydrocarbons include but are not limited to short chain (C₁ to C₅) paraffins and olefins (for example ethane, ethylene, propane, propylene, butanes, and butylenes).

Certain (petro)chemicals are produced commercially by the partial oxidation of an appropriate hydrocarbon in the vapor phase over a suitable catalyst and in the presence of an oxygen-containing gas. For example, cyclic anhydrides are produced commercially by the vapor phase catalytic partial oxidation of aromatic hydrocarbons, such as o-xylene or benzene, or straight-chain hydrocarbons, such as n-butane, or butene, in the presence of an oxygen-containing gas, over a vanadium-containing catalyst. Similarly, nitrites, alkylene oxides, aldehydes and halogenated hydrocarbons are produced by the partial oxidation of appropriate alkanes and alkenes in the presence of selected catalysts.

Air is generally used as the oxygen-containing gas, because of its low cost and ready availability. Oxygen-enriched air is also used. The reaction can be carried out in any suitable reactor, such as a fixed bed, a fluidized bed, a moving bed, a trickle bed or a transport bed reactor, and it produces the petrochemical, and generally carbon monoxide (CO), carbon dioxide (CO₂), water, and smaller amounts of other partially oxidized by-products. The reaction is typically performed in an equipment train generally consists of a reactor, in which the petrochemical product is produced, a scrubber, in which the petrochemical product is scrubbed from the reactor effluent gases by means of water or other solvent for the petrochemical, and means for further treating the scrubbed effluent gases.

Currently, it is common to practise the above-described process on a single pass basis with the conversion of hydrocarbon to the desired petrochemical product being maximised. This practice results in a low overall efficiency, since the selectivity to petrochemical product is below the maximum. Consequently, the scrubber effluent gas contains considerable amounts of CO and CO₂ in addition to unreacted hydrocarbon. The effluent gas is usually incinerated, so that the only return from the unreacted hydrocarbon and the carbon monoxide is heat value. In modified processes, a portion of the scrubber effluent gas is recycled, resulting in the percentage conversion of the hydrocarbon feedstock being lowered and the selectivity of hydrocarbon conversion to the desired petrochemical product being increased. The remainder of the effluent gas is purged from the system to prevent the buildup of CO, CO₂ and nitrogen (introduced into the system when air is used as the source of oxygen). These improvements result in a reduced "per pass" conversion, but the overall efficiency of the process is increased. In such systems, an adsorbent is typically employed to separate hydrocarbons from the effluent gas stream.

Typical processes do not make allowance for moisture contained in the gaseous effluent from the partial oxidation product recovery unit and in purge air, if ambient air is used to purge the adsorbent. Moisture is produced in the partial oxidation reaction; accordingly, the hot gaseous effluent from the reactor contains moisture. As the effluent gas passes through the product scrubber some moisture may be removed by condensation due to cooling of the gas stream, if an aqueous solvent is used. If a non-aqueous solvent is used moisture is not permitted to condense. In any event, the gas stream leaving the scrubber still contains moisture, and in fact can be saturated with moisture, even if a non-aqueous scrubbing agent is used. Moisture is more strongly adsorbed than the unreacted hydrocarbons and carbon oxides by conventional adsorbents; accordingly, unless the moisture is removed from the gas stream entering the adsorption units, it will be preferentially adsorbed onto the adsorbent, thereby reducing the capacity of the adsorbent for hydrocarbon adsorption.

The problem of moisture is further aggravated when ambient air is used as a purge gas for regeneration of the beds of adsorbent. Ambient air contains moisture; thus, moisture will replace the hydrocarbon being desorbed from the adsorption beds during the purge step when the beds are purged with the air. This will further reduce the capacity of the adsorbent during the adsorption step of the following cycle.

It is known to remove moisture from ambient air or a gas stream by various techniques. For example the air and gas streams can be dried by passing the air and gas stream through desiccants.

The present invention provides an adsorptive separation process which makes it possible for such reactions to be conducted with higher selectivity although with a lower per pass conversion, which in combination with the proposed efficient recovery and recycle of unreacted hydrocarbons, increases the overall yield. Since the products would be recycled, pollution and costs associated with the incineration of unreacted hydrocarbons should be significantly reduced.

### SUMMARY OF THE INVENTION

According to a first aspect of the present invention there is provided a method for separating a hydrocarbon gas from a mixture of gases comprising the steps:
a) passing said gas mixture through an adsorbent bed containing a highly siliceous nanoporous adsorbent, wherein said hydrocarbon is adsorbed by said highly siliceous nanoporous adsorbent; and
b) passing steam through said adsorbent bed thereby desorbing said hydrocarbon; and
c) recovering a product stream comprising said hydrocarbon.

The method according to the first aspect of the present invention preferably comprises two steps in a short-cycle time concentration swing adsorption system. In the first step, the hydrocarbon is adsorbed on a highly siliceous nanoporous materials, e.g., such as of aluminum-deficient faujasite-type zeolites (for instance USY or DAY). The adsorbent is preferably hydrophobic and is stable in the presence of water and/or steam.

In the second step of the method according to he first aspect of the invention, hydrocarbon is desorbed using steam, which may then be condensed out of the resulting effluent to recover the hydrocarbon for further use.

In a third optional step of the method according to the first aspect of the invention, water vapour is desorbed from the adsorbent through the use of air, or inert gas (such as nitrogen), or recycle of the lean gas (waste) effluent which is produced in the first step. The method according to the first aspect of the invention is typically conducted at a temperature of approximately 100° C to 200° C and a pressure of 1 to 2 bar.

A feature of the method according to the first aspect of the invention is that desorption of adsorbed water is not complete with the result that the adsorbent remains loaded with water vapour throughout an entire series of cycles. The adsorbent is able to be used in hot and wet process surroundings without losing either its chemical identity, nanoporosity or even advantageous hydrocarbon adsorption properties.

The use of steam to regenerate the adsorbent in the method according to the first aspect of the invention make possible very short cycle times, thus providing the following advantages:
(1) significantly smaller size and capital cost plant;
(2) significantly reduced operating expense;
(3) regeneration of adsorbent at positive pressures;
(4) elimination of flammability issues;
(5) higher purity / quality product
as will be further explained below

Because the adsorbent is regenerated at positive pressures no vacuum system is required, thus keeping down the capital and operating expense of plant for operating the method and increasing its intrinsic safety. Such plant is typically much smaller than conventional pressure swing adsorption (PSA) or vacuum swing adsorption (VSA) systems due to the short cycle time which results in lowering capital expenditure and footprint size as well as operating expenses. A higher quality of hydrocarbon concentration of product due to a lower concentration of inerts in the hydrocarbon product stream will also result.

Preferably the steam is superheated.

In prior methods that operate under vacuum, the risk of air ingression exists. The preferred pressure range for the proposed invention is therefore close to or slightly over atmospheric pressure thus minimizing these risks. Furthermore, flammability issues are typically an important concern when conventional PSA, VSA or temperature swing adsorption (TSA) processes are used to recover hydrocarbons from oxygen containing mixtures or when the adsorbent regeneration step utilizes air or other oxygen-containing gases. In the present invention, the use of steam to regenerate the adsorbent minimizes this concern.

The method according to the first aspect of the present invention is also able to produce higher quality hydrocarbon product which has a higher concentration of hydrocarbon and less non-condensable gaseous inerts than would be obtained in classical PSA, VSA or TSA processes. This is accomplished through the use of steam for adsorbent regeneration as opposed to the use of air or other non-condensable gases. Nanoporous highly siliceous materials, for example, dealuminated zeolites (DAY) and ultra-stable zeolites (USY) are not particularly sensitive to water or steam. The adsorbents may have specific shapes such as monolithic structures and beads.

The adsorbent may be in the form of pellets or in a structured packing or other suitable form. Structured packing typically has the advantage of allowing a higher linear velocity of gases passing through the adsorbent bed. High linear velocities are desirable to allow for short part-cycle times of up to 600 seconds, preferably up to 60 seconds, more preferably from about 3 to about 8 seconds per step of the cycle.

The method according to the invention may be performed at a pressure of from about 0.1 to about 20 bar gauge with a range of about 0.3 to about 3 bar gauge preferred.

Preferably the bed temperature is above 100°C in order to allow steam to be effectively used as a purge agent. However, the temperature may be as low as 40°C or as high as 300°C, preferably in the range of from about 100°C to about 200°C.

Superheated steam may be used to desorb hydrocarbon and prevent steam condensation in the bed.

Preferably, heat is recovered from spent steam, typically by means of heat exchangers.

In one embodiment of the invention, the product mixture, which includes desorbed hydrocarbon and steam, transfers by heat exchange at least some of its heat to a stream of hot water which is preferably formed of water condensed from the product mixture. Steam is formed as a result, and then the quality of this stream of steam is raised by adding heat through an additional heat exchanger. As a result, superheated steam is prepared for the next cycle.

An additional benefit of the present invention is that the lean gas, that is the non-adsorbed gas from the adsorption step of the method according to the first aspect of the invention which is typically composed of mainly inert gases, can be recycled in order to desorb water vapour and to enhance heat recovery. Alternatively, hot air or inert gas may be used to desorb steam in a separate step. The so-used air or inert gas may be pre-heated to provide improved and more efficient hydrocarbon recovery.

The lean gas produced during the adsorption step may be transferred to a buffer tank for subsequent reuse, for example, in the event of a disturbance to the method according to the first aspect of the invention.

The amount of lean gas to recycle to the bed may be determined by that needed to desorb the rest of the steam in the bed to a desired level.

Adsorbent bodies used in the method according to the first aspect of the invention are preferably formed by the method according to the second aspect of the invention. Thus individual adsorbent particles are subjected to acid and thermal treatment, before the shaping procedure takes place. Within the mesopores of the adsorbent bodies, but not within their secondary porosity, process water remains trapped even during the desorption step. Thus, no reduction occurs in both the adsorption capacity and selectivity of the adsorbent material towards hydrocarbons.

As mentioned above, air or inert gas may be used instead of lean gas to desorb water vapour from the adsorbent. Fresh air or nitrogen can in some cases be more effective as a purge gas than recycled lean gas; however, inert gases are generally to be preferred to air if the latter were to give rise to a flammability hazard. The purge gas is preferably heated before introduction into the adsorbent to maintain a desired temperature and desorb the majority of steam in the adsorbent.

In another alternative, a stream of lean gas may be combined with air or inert gas through a mixing device to form a purge stream containing a regulated amount of oxygen and does not present a flammability hazard. The air or inert gas preferably is heated before mixing with lean gas to maintain a desired temperature.

### BRIEF DESCRIPTION OF THE DRAWINGS

The method according to the invention will now be described by way of example with reference to the accompanying drawings in which:
Figure 1 is a schematic representation of a short cycle time hydrocarbon separation process;
Figure 2 is a schematic representation of a short cycle time hydrocarbon separation process using a different stream to desorb steam in the adsorbent bed; and
Figure 3 is a schematic representation of a short cycle time hydrocarbon separation process with a modification of the lean gas stream to desorb the steam in the adsorbent bed.

Like parts in the Figures are indicated by the same reference numerals.

### DETAILED DESCRIPTION OF THE INVENTION

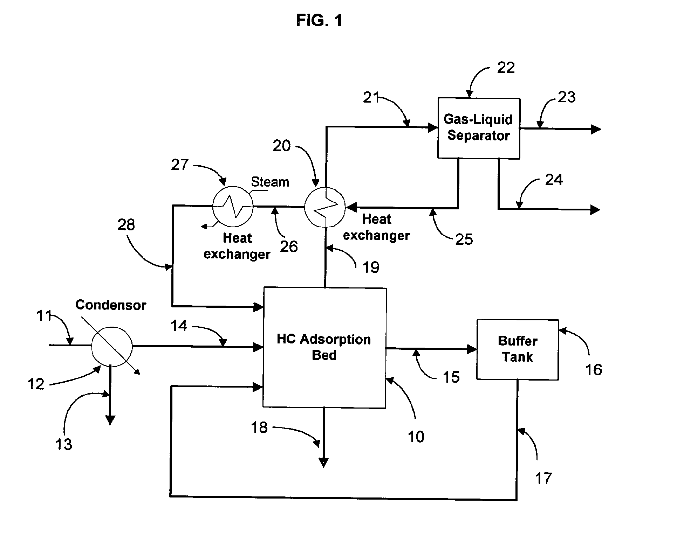

Figure 1 shows a first plant for performing a short-cycle-time hydrocarbon separation process including partial heat recovery. A feed gas stream 11 is fed to condenser 12 to reduce the water vapour content of the feed gas stream 11, and the resulting gas stream is introduced to an hydrocarbon adsorption bed 10. The hydrocarbons in the feed gas stream are adsorbed on the adsorbent (zeolite Y in this example) which has a high selectivity for hydrocarbons. A stream of the resulting non-adsorbed gas, referred to herein as hot lean gas 15 passes to a buffer tank 16. The hot lean gas comprises a majority of inert gas and a small amount of water vapour.

After the adsorption step is completed, superheated steam is passed to the hydrocarbon adsorption bed 10 to desorb the hydrocarbon on the adsorbent and produce a stream of a gaseous product mixture. The step of desorption is completed in a short time. The gaseous product mixture leaving the hydrocarbon adsorption bed is composed of hydrocarbon, superheated steam, and a small amount of inerts. The stream of gaseous product mixture is fed to a heat exchanger 20 through a line 19. In the heat exchanger 20, heat of the gaseous product mixture is transferred to a stream of hot water 25, taken from a gas-liquid separator 22. After the product mixture loses heat energy through the heat exchanger, it is fed to the gas-liquid separator 22 through product mixture line 21. The gas-liquid separator 22 comprises a condenser which is operable to condense water out of the gaseous product mixture.

The condensed water required for the next cycle is recycled through a line 25, and excess water is discharged from the plant as stream 24. The water typically contains dissolved CO₂ and therefore the stream 24 acts as a continuous purge of carbon dioxide. The water fed through the line 25 is converted to steam. The resulting flow of steam 26 is fed to additional heat exchanger 27 to produce superheated steam 28 for introduction into the hydrocarbon adsorption bed 10 in the next cycle. At the end of the desorption step, a lean gas stream 17 taken from the buffer tank 16 is passed through the adsorption bed 10 to desorb and purge therefrom the bulk of the steam adsorbed in the previous step.

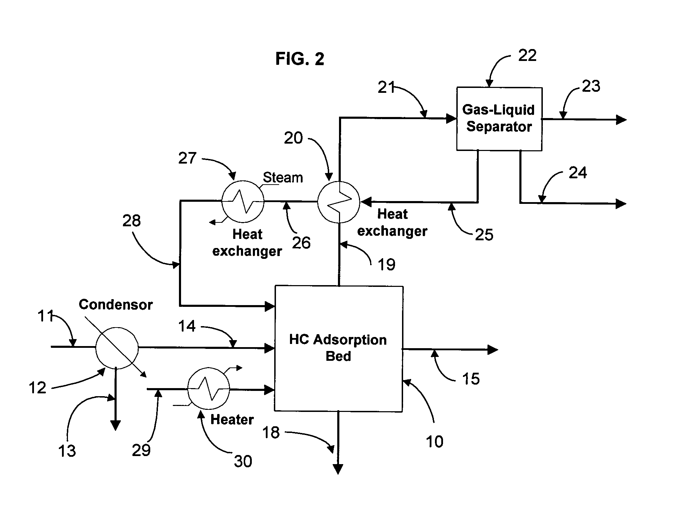

Referring now to Figure 2, the plant shown therein and its operation are generally similar to Figure 1. However, a different stream is used to desorb the bulk of the steam in the bed. Now, a stream of ambient air or inert gas 29 is fed to gas heater 30 to maintain a desired temperature to desorb the majority of the steam in the bed. If hot process air or inert gas is available nearby, then a gas heater may not be necessary. Further, in the plant shown in Figure 2, the hot lean gas 15 is purged from the separation system without recycling. In the case of air, the introduction of the waste feed stream is controlled carefully due to the flammability of hydrocarbon in air.

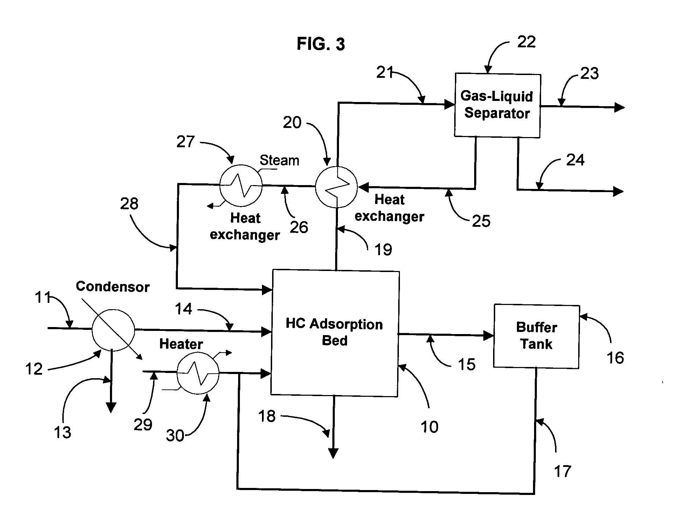

Referring now to Figure 3, the plant shown therein and its operation are generally similar to Figure 1. Now, however, the recycled lean gas stream 17 is mixed with a stream of ambient air or inert gas 29 which is heated by heater 30 to maintain a desired temperature. If hot process air or inert gas is available nearby, then the gas heater may not be necessary. The combination of lean gas and air or inert gas may allow for safer operation than air alone.

In the operation of any of the plants shown in Figures 1 to 3, each of the three steps of each adsorption cycle preferably lasts for 3 to 8 seconds, the temperature at which the adsorption bed is operated is typically in the range 100 to 200°C throughout, and the pressure to which the adsorption bed is subjected is preferably from 1 to 2 bar (absolute) throughout. Typically, a plurality of beds 10 are operated out of phase with one another so as to provide a continuous supply of hydrocarbon product. Highly siliceous micro- and meso porous *(i.e.,* nanoporous) adsorbent materials such as molecular sieve / zeolite type materials in specific shapes such as monoliths and beads are used in the adsorbent bed 10. These materials are made based on novel methods for making adsorbent bodies such as monoliths and beads. Monoliths and beads are generally preferred to other shapes. For example, the reason that beads are superior to other shapes such as cylinders and hollow cylinders is due to their advantages in pressure drop behaviour of packed adsorber columns and mechanical stability under the influence of frequently changing pressures in both pressure swing adsorption (PSA) and temperature swing adsorption (TSA) processes. Additionally, this superior performance is shown by significantly increased gas flow rates, significantly accelerated mass transfer due to an optimum in surface-to-volume ratio and regulation of macrokinetics within the pore system of beads, and maximized packing density of the adsorbent particles in adsorber columns.

For these reasons, it has been preferred in adsorption processes to use beads rather than cylinders or even hollow cylinders. There is also an additional advantage in utilizing even more compact secondary adsorbent structures such as monoliths that allow the specific and significant reduction in the cycle time in processes of their practical utilization. Up to now highly siliceous micro- and mesoporous (nanoporous) adsorbent and catalyst materials, and specifically for such materials as, for example, DAY or USY-type zeolites have been commercially available as monoliths or beads. However, such shaped bodies of zeolites may readily be manufactured.

The zeolite preferably comprises monolithic structures or beads of a pulverulent crystalline nanoporous material. The material is preferably a zeolite of aluminum-deficient Y (faujasite) type such as of its sub-types DAY (dealuminated Y) and USY (ultrastable Y), furtheron, Beta, erionite, mordenite, silicalite-1, silicalite-2, Theta-1, Theta-3, ZSM-3, ZSM-5, ZSM-11, ZSM-12, ZSM-20, or a mixture of two more such zeolites or mesoporous material such as MCM-41 or MCM-48, and mixtures thereof.

## Claims

1. A method for separating a hydrocarbon gas from a mixture of gases comprising the steps:
a) passing said gas mixture through an adsorbent bed containing a highly siliceous nanoporous adsorbent, wherein said hydrocarbon is adsorbed by said highly siliceous nanoporous adsorbent; and
b) passing steam through said adsorbent bed thereby desorbing said hydrocarbon; and
c) recovering a product stream comprising said hydrocarbon.

2. A method as claimed in claim 1, wherein said highly siliceous nanoporous adsorbent is an aluminum-deficient faujasite-type zeolite.

3. A method as claimed in claim 2, wherein said aluminum-deficient faujasite-type zeolite is dealuminated Y-type zeolite.

4. A method as claimed in any one of the preceding claims, wherein said highly siliceous nanoporous adsorbent is in the shape of a monolith or the shape of a bead.

5. A method as claimed in claim 4, wherein said product stream further contains steam.

6. A method as claimed in claim 5, wherein heat is recovered from said product stream.

7. A method as claimed in any one of the preceding claims, wherein the pressure of said gas mixture is about 0.1 to about 20 bar.

8. A method as claimed in any one of the preceding claims, wherein the temperature of said gas mixture is about 40° to about 300°C.

9. A method as claimed in any one of the preceding claims, wherein said hydrocarbon is selected from the group consisting of short chain paraffins and olefins.

10. A method as claimed in claim 1, further comprising the step of desorbing said steam from said adsorbent by passing a gas stream over said adsorbent.

11. A method as claimed in claim 10, wherein said gas stream is selected from the group consisting of air, recycled non-adsorbed gas, an inert gas, and waste gas.

12. A method as claimed in any one of the preceding claims, wherein the steps are continuously repeated in sequence.

13. A method as claimed in any one of the preceding claims, wherein each of the said steps (a) to (c) has a duration of up to 60 seconds.

14. A method as claimed in claim 13, wherein the duration is from 3 to 8 seconds.
